# EUROPÄISCHE PATENTSCHRIFT

(11) **EP 0 431 242 B1**
(45) Veröffentlichungstag und Bekanntmachung des Hinweises auf die Patenterteilung: **04.08.1993**
(21) Anmeldenummer: 90108973.0
(22) Anmeldetag: 12.05.1990
(51) Int. Cl.: F16F 15/12, F16D 3/76, F16H 55/42

(54) **Torsionsschwingungstilger**
Torsional vibration damper
Amortisseur de vibration de torsion

(30) Priorität: 08.12.1989 DE 3940602
(43) Veröffentlichungstag der Anmeldung: 12.06.1991
(73) Patentinhaber: Firma Carl Freudenberg, 69469 Weinheim (DE)
(72) Erfinder: Colford, Terry, Leicestershire (GB)

(56) Entgegenhaltungen:
- DE-A- 3 534 519
- DE-C- 3 826 088
- FR-A- 2 394 719
- GB-A- 1 582 316

## Beschreibung

Die Erfindung betrifft einen Torsionsschwingungstilger, bei dem ein metallischer Schwungring durch einen unabhängig erzeugten Federring aus Gummi auf dem Außenumfang eines Nabenringes aus metallischem Werkstoff festgelegt ist, wobei der Nabenring auf der dem Federring zugewandten Seite mit einer fest haftenden, durchgehenden Beschichtung aus Kunststoff versehen ist.

Ein solcher Torsionsschwingungstilger ist aus der DE-A 2825 075 bekannt. Der Nabenring ist dabei im Hinblick auf eine Verbesserung des Leistungsgewichtes aus thermoplastischem Kunststoff erzeugt und im Bereich seines Außenumfanges zur Verminderung der Kriechneigung mit einer metallischen Verstärkungseinlage versehen. Die erzielte Tilgerwirkung wird in hohem Maße von den Temperaturen beeinflußt, welche sich während der bestimmungsgemäßen Verwendung ergeben.

Der Erfindung liegt die Aufgabe zugrunde, einen solchen Torsionsschwingungstilger derart weiterzuentwickeln, daß die sich unter dem Einfluß wechselnder Umgebungstemperaturen ergebende Tilgerwirkung von besserer Konstanz ist.

Diese Aufgabe wird erfindungsgemäß bei einem Torsionsschwingungstilger der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Torsionsschwingungstilger ist es vorgesehen, daß die Beschichtung aus einem duroplastischen Werkstoff besteht und daß das Verhältnis aus der durchschnittlichen, radialen Dicke A der Beschichtung und der durchschnittlichen, radialen Dicke B des Federringes 0,25 bis 3 beträgt.

Durch die Verwendung des duroplastischen Kunststoffes zur Herstellung der Beschichtung wird erreicht, daß diese kriechfest ist. Auch unter der unter Umständen erheblichen, radialen Vorspannung des Federringes ist daher eine grundlegende Veränderung der herstellungsbedingten Gestalt der Beschichtung nicht zu erwarten. Auch im langfristigen Gebrauch bleibt daher die herstellungsbedingte Vorspannung in dem Federring weitestgehend erhalten.

Die Vorspannung in dem Federring erfährt auch bei ansteigenden Temperaturen, welche beispielsweise durch die Verwendung bedingt sein können, keine nennenswerte Veränderung insofern, als dem sich in einer solchen Situation ergebenden Abfall der Federsteifigkeit des Federringes eine sich vergrößernde Vorspannung desselben gegenübersteht. Letztere beruht auf einer radialen Aufweitung des Außendurchmessers der Beschichtung infolge der Erwärmung. Sie ist in quantitativer Hinsicht ebenso wie die Verminderung der Federsteifigkeit des Federringes abhängig von den im einzelnen erreichten Temperaturen. Die sich ergebende Tilgerwirkung ist dadurch weitgehend temperaturunabhängig stets in gleicher Weise verfügbar.

Nach einer vorteilhaften Ausgestaltung ist es vorgesehen, daß das Verhältnis aus der durchschnittlichen, radialen Dicke A der Beschichtung und der durchschnittlichen, radialen Dicke B des Federringes 0,25 bis 3 beträgt.

Innerhalb des angesprochenen Bereiches wird bei Verwendung von Epoxyd- oder Polyesterharzen zur Herstellung der Beschichtung eine besonders gute Wirksamkeit erreicht. Der Nabenring erfährt im Bereich seines Mantels durch die fest anhaftende Beschichtung aus duroplastischem Werkstoff eine merkliche Verbesserung seiner Steifigkeit. Hierdurch ist es möglich, den Nabenring durch Tiefziehen aus einem Stahlblech zu erzeugen, welche sich von den bekannten Ausführungen durch eine deutlich reduzierte Dicke unterscheidet. Die dadurch bedingte Reduzierung des Gesamtgewichtes des Nabenringes gestattet es, die Masse des Schwungringes im gleichen Umfange zu vergrößern und hierdurch eine wesentlich verbesserte Tilgerleistung zu erzielen, bezogen auf das Gesamtgewicht des Torsionsschwingungstilgers.

Der Mantel des Nabenringes kann zur Verbesserung der Anbindung der Beschichtung mit radialen Eintiefungen versehen sein. Seine der Beschichtung zugewandte Oberfläche erfährt hierdurch eine Vergrößerung, was eine Steigerung der übertragbaren Kräfte bewirkt.

Die Eintiefungen können durch die Zwischenräume einer in Umfangsrichtung fortgesetzten, sinusförmigen Wellung des Mantels gebildet sein. Neben einer Vergrößerung der für eine sichere Anbindung der Beschichtung benötigten Haftfläche resultiert hieraus eine deutliche Steigerung der Formbeständigkeit des Nabenringes. Die Dicke des für die Herstellung des Nabenringes benötigten Ausgangsmaterials läßt sich dementsprechend nochmals reduzieren.

Die Eintiefungen können aus den Mantel ganz durchdringenden Löchern bestehen, beispielsweise solchen, die durch Stanzen oder Bohren erzeugt sind. Sie gewährleisten nach dem Eindringen der in flüssigem Zustand angeformten Beschichtung einen sicheren Halt derselben an dem Mantel.

Der Mantel kann auf der Innenseite durch eine zweite, unmittelbar angeformte, kontinuierlich durchgehende Beschichtung aus dem duroplastischen Werkstoff versteift sein. Es ergibt sich in diesem Falle eine Sandwichstruktur im Bereich des Mantels des Nabenringes, welche sich durch eine besonders gute Formbeständigkeit auszeichnet. Zweckmäßig sind die beiden Beschichtungen bei einer solchen Ausbildung einstückig ineinander übergehend ausgeführt, beispielsweise durch Vorsprünge, die den Mantel des Nabenringes stirnseitig umgreifen oder durch den Mantel des Nabenringes durchdringende Löcher hindurch.

Die Beschichtung kann durch darin verteilte Fasern verstärkt sein, beispielsweise durch Fasern aus Textilien, mineralischen oder metallischen Werkstoffen. Falls die Fasern von geringer Länge sind, ist eine unmittelbare Einmischung möglich, was die Erzielung einer gleichmäßigen Verteilung vereinfacht.

Die Fasern können bei größerer Länge auch zu einem eigenfesten Flächengebilde vereint sein, beispielsweise einem Flächengebilde in Gestalt eines Gewebes, eines Gewirkes oder Vliesstoffes. Dieses sollte sich zweckmäßig in Umfangsrichtung erstrecken.

Hinsichtlich der Auswahl und Einbringung entsprechender Verstärkungselemente ist zu berücksichtigen, daß die lineare Wärmedehnung der Beschichtung keine so weitgehende Beeinträchtigung erfährt, daß die sich bei höheren Temperaturen ergebende Verminderung der Federsteifigkeit des Federringes nur noch unzureichend kompensiert wird. Der mengenmäßige Anteil entsprechender Verstärkungselemente darf unter diesem Gesichtspunkt auch nicht zu hoch bemessen sein.

Der Gegenstand der Erfindung wird nachfolgend anhand der als Anlage beigefügten Zeichnung weiter verdeutlicht. Es zeigen:
- Fig. 1 + 2: eine erste Ausführung des erfindungsgemäßen Torsionsschwingungstilgers in längsgeschnittener Darstellung und in der Vorderansicht;
- Fig. 3 + 4: eine zweite Ausführung des erfindungsgemäßen Torsionsschwingungstilgers in längsgeschnittener Darstellung und in der Vorderansicht;
- Fig. 5 + 6: verschiedene Segmentausschnitte von Torsionsschwingungstilgern.

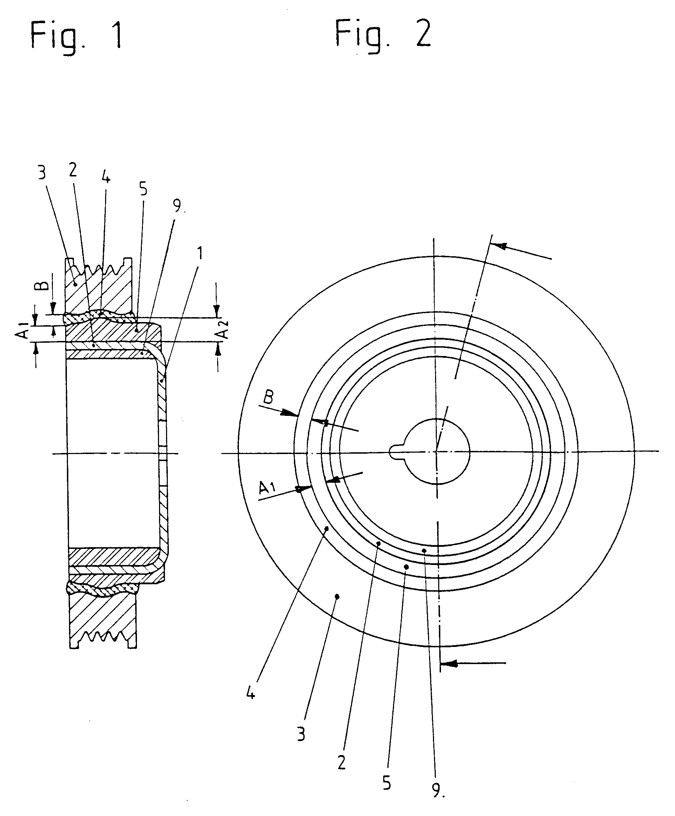

Der in den Fig. 1 + 2 gezeigte Torsionsschwingungstilger umfaßt einen metallischen Nabenring aus tiefgezogenem Blech, der topfförmig gestaltet ist und einen sich im wesentlichen achsparallel erstreckenden Mantel 2 aufweist. Der Mantel 2 ist außenseitig mit einer in flüssigem Zustand angeformten und nachfolgend verfestigten, kontinuierlich durchgehenden Zwischenschicht 5 aus einem duroplastischen Kunststoff beschichtet, nämlich einem faserverstärkten Epoxydharz. Die Zwischenschicht ist rotationssymmetrisch gestaltet. Sie hat, in Längsrichtung betrachtet, auf der in radialer Richtung nach außen weisenden Seite ein sinuskurvenförmig begrenztes Profil.

Die Zwischenschicht 5 findet auf der Innenseite des Mantels 2 eine kontinuierliche Ergänzung in der rotationssymmetrisch ausgebildeten Schicht 9. Diese ist innenseitig durch eine Zylinderfläche begrenzt.

Die Zwischenschicht 5 ist außenseitig von dem Schwungring 3 umschlossen. Dieser ist innenseitig durch eine rotationssymmetrische Fläche begrenzt, welche sich im wesentlichen parallel zu der Außenkontur der Zwischenschicht 5 erstreckt.

In den Zwischenraum zwischen dem Schwungring 3 und der Zwischenschicht 5 ist ein separat erzeugter Federring 4 aus Gummi in axialer Richtung eingepreßt. Herstellungsbedingt hat der Federring 4 eine radiale Erstreckung, die größer ist als die verfügbare Spaltbreite zwischen der Zwischenschicht 5 und dem Schwungring 3. Die hieraus resultierende, elastische Vorspannung in dem Federring 4 gewährleistet eine drehelastische, jedoch unverlierbare Festlegung des Schwungringes 3 auf dem Außenumfang des Nabenringes 1.

Bei dem in den Fig. 1 + 2 gezeigten Ausführungsbeispiel hat der Federring 4 aus Gummi in allen Teilbereichen im eingebauten Zustand eine übereinstimmende Dicke von etwa 4 mm.

Der Zwischenring 5 hat in der Zwischenzone zwischen dem Mantel 2 und dem Federring 4 eine Dicke in radialer Richtung, die in den verschiedenen Teilbereichen zwischen 7 mm und 9 mm variiert und durchschnittlich 7,6 mm beträgt. Die radiale Dicke des Federringes 4 ist mit 8 bezeichnet, diejenige der Zwischenschicht 5 im Bereich der größten und im Bereich der kleinsten Erstreckung mit A 2 bzw. A 1.

Bei dem vorstehend beschriebenen Ausführungsbeispiel eines Torsionsschwingungstilgers ist der Schwungring 3 im Bereich seines Außenumfanges als Keilriemenscheibe gestaltet. Eine hiervon abweichende Ausbildung des Torsionsschwingungstilgers ist problemlos möglich und beispielsweise eine Gestaltung, bei der die Beschichtung 5 des Mantels 2 in dem radial nicht von dem Schwungring 3 übergriffenen Bereich außenseitig mit einem Keilriemenscheibenprofil versehen ist.

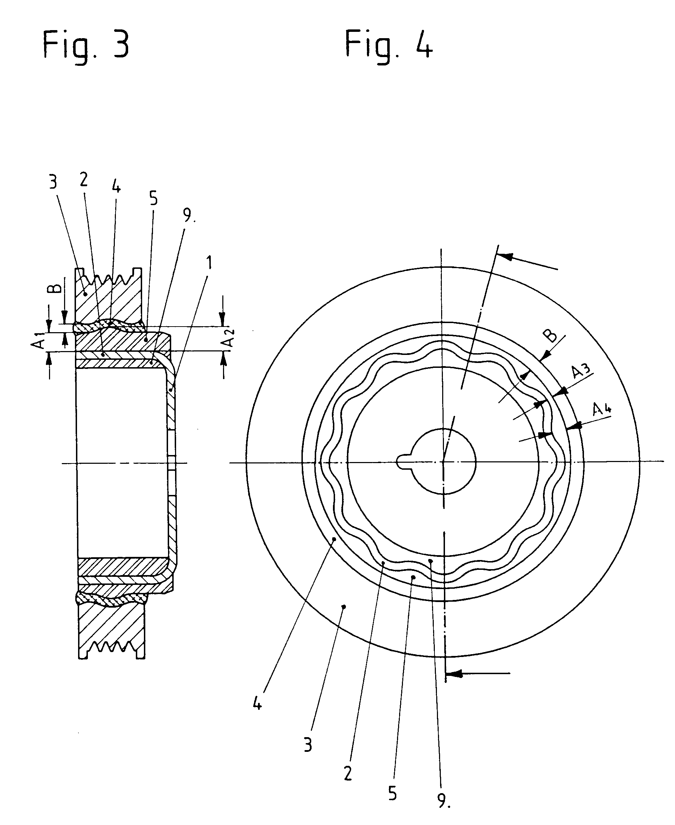

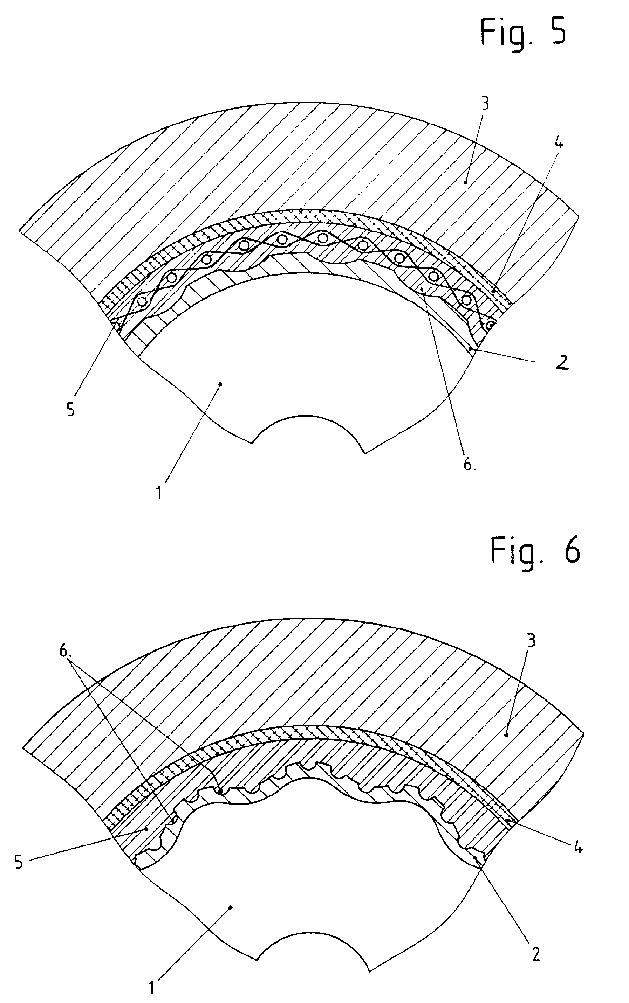

Die in den Fig. 3 + 4 gezeigte Ausführung eines Torsionsschwingungstilgers unterscheidet sich von der vorstehend beschriebenen im wesentlichen dadurch, daß der Mantel 2 des Nabenringes 1 mit einer achsparallelen Wellung versehen ist, die sich in Umfangsrichtung erstreckt. Der Mantel 5 erfährt hierdurch eine wesentliche Aussteifung, was es gestattet, zur Herstellung des Nabenringes 1 ein Tiefziehblech vergleichsweise verminderter Dicke zu verwenden.

Der Mantel 2 ist entsprechend den vorstehenden Darlegungen in Kunstharz eingebettet, wobei die Beschichtungen 5 und 9 in radialer Richtung nach innen und in radialer Richtung nach außen durch die Rotationsachse konzentrisch umschliessende Flächen begrenzt sind.

Bedingt durch den in axialer Richtung glockenförmigen Verlauf der radial nach außen weisenden Begrenzungsfläche der Beschichtung 5 und den sinuskurvenförmigen Verlauf des Mantels 2 in Umfangsrichtung hat die Beschichtung 5 eine radiale Dicke, die sowohl in axialer Richtung als auch in Umfangsrichtung ständig variiert. Einige der bei der Ermittlung der Durchschnittsdicke zu berücksichtigenden Werte wurden in die Fig. 3 + 4 eingetragen und mit A 1 bis A 4 bezeichnet. Die radiale Dicke des Federringes 4 aus Gummi wurde mit B bezeichnet.

Fig. 5 zeigt einen Torsionsschwingungstilger, bei dem der Mantel 2 des Nabenringes 1 auf der Außenseite mit kalottenförmigen Eintiefungen 6 versehen ist, welche die für die Anbindung der Zwischenschicht 5 erforderliche Haftfläche merklich vergrößern. Die Eintiefungen 6 können durch Prägen oder Stanzen erzeugt sein. Sie lassen sich besonders einfach anbringen zu einem Zeitpunkt, in welchem sich das für die Herstellung des Nabenringes 1 verwendete Ausgangsmaterial noch in einer ebenen Gestalt befindet. Die bei einer solchen Vorgehensweise auch im Bereich des radial nach innen vorspringenden Bereiches des Nabenringes 1 vorhandenen Eintiefungen sind im Regelfall nicht störend.

Bei der in Fig. 6 gezeigten Ausführung sind neben Eintiefungen der vorstehend angesprochenen Art zusätzlich in Umfangsrichtung aufeinander folgende Wellentäler des Mantels 2 des Nabenringes 1 vorhanden. Neben einer besonders zuverlässigen Anbindung des die Zwischenschicht 5 bildenden, polymeren Werkstoffes resultiert hieraus eine merkliche Versteifung des Nabenringes 1. Die Dicke des ihn bildenden Ausgangsmaterials und damit das Gewicht läßt sich dementsprechend gegenüber der in Fig. 5 gezeigten Ausführung nochmals reduzieren.

Die durch das nachträgliche Einpressen und elastische Vorspannen von dem Federring 4 in radialer Richtung ausgeübten Kräfte lassen sich bei allen Ausführungen unter Verwendung von Nabenringen 1 auffangen, welche im Vergleich zu den bekannten Ausführungen eine deutlich vermindernde Wandstärke und ein dementsprechend verminderndes Gewicht haben. Die Torsionsschwingungstilger weisen hierdurch bei einem vorgegebenen Gesamtgewicht eine verbesserte Tilgerleistung auf. Zusätzlich wird eine durch Erwärmung bedingte Verminderung der Federsteifigkeit des Federringes 4 durch die sich gleichzeitig ergebende Wärmedehnung der Beschichtung 5 in radialer Richtung in günstiger Weise kompensiert. Eine erwärmungsbedingte Verschiebung der Resonanzfrequenz des Torsionsschwingungstilgers in einen abweichenden Bereich ist dadurch nicht mehr zu befürchten. In bezug auf die Unterdrückung störender Drehschwingungen ist das von großem Vorteil.

## Patentansprüche

1. Torsionsschwingungstilger, bei dem ein metallischer Schwungring (3) durch einen unabhängig davon erzeugten Federring (4) aus Gummi auf dem Außenumfang eines Nabenringes (1) aus metallischem Werkstoff festgelegt ist, wobei der Nabenring (1) auf der dem Federring (4) zugewandten Seite mit einer fest haftenden, durchgehenden Beschichtung (5) aus Kunststoff versehen ist, **dadurch gekennzeichnet,** daß die Beschichtung (5) aus einem duroplastischen Kunststoff besteht und daß das Verhältnis aus der durchschnittlichen, radialen Dicke A der Beschichtung (5) und der durchschnittlichen, radialenDicke B des Federringes (4) 0,25 bis 3 beträgt.

2. Torsionsschwingungstilger nach Anspruch 1, dadurch gekennzeichnet, daß das Verhältnis A/B 1-2 beträgt.

3. Torsionsschwingungstilger nach Anspruch 2, dadurch gekennzeichnet, daß die Beschichtung (5) aus Epoxyd- oder Polyesterharz besteht.

4. Torsionsschwingungstilger nach Anspruch 1 bis 3, dadurch gekennzeichnet, daß der die Beschichtung (5) bildende Kunststoff durch darin verteilte Fasern verstärkt ist.

5. Torsionsschwingungstilger nach Anspruch 4, dadurch gekennzeichnet, daß die Fasern untereinander zu einem eigenfesten Flächengebilde vereint sind.

6. Torsionsschwingungstilger nach Anspruch 1 bis 5, dadurch gekennzeichnet, daß die Beschichtung mit in Umfangsrichtung verteilten, radial nach innen weisenden Vorsprüngen versehen ist und daß den Vorsprüngen Ausnehmungen entsprechend der Verteilung, Form und Größe des Nabenringes (1) zugeordnet sind.

7. Torsionsschwingungstilger nach Anspruch 6, dadurch gekennzeichnet, daß die Vorsprünge und Ausnehmungen durch eine sinusförmige Wellung der einander zugewandten Oberflächen der Beschichtung (5) und des Nabenringes (1) gebildet sind.

## Claims

1. A torsional vibration damper, in which a metallic flywheel (3) is fixed by a rubber spring ring (4), generated independently of it, on the outer periphery of a hub ring (1) of metallic material, the hub ring (1) being provided, on its side facing towards the spring ring (4), with a permanently adhering, continuous plastic coating (5), characterised in that the coating (5) is composed of a duroplastic material and in that the ratio between the average, radial thickness A of the coating (5) and the average, radial thickness B of the spring ring (4) is from 0.25 to 3.

2. A torsional vibration damper according to claim 1, characterised in that the ratio A/B is 1-2.

3. A torsional vibration damper according to claim 2, characterised in that the coating (5) is composed of an epoxy resin or a polyester resin.

4. A torsional vibration damper according to any of claims 1 to 3, characterised in that the plastic forming the coating (5) is reinforced by fibres distributed within it.

5. A torsional vibration damper according to claim 4, characterised in that the fibres are combined with one another to give an intrinsically strong sheet-like formation.

6. A torsional vibration damper according to any of claims 1 to 5, characterised in that the coating is provided with protrusions pointing radially inwards and distributed in the peripheral direction and in that recesses corresponding to the distribution, shape and size of the hub ring (1) are associated with the protrusions.

7. A torsional vibration damper according to claim 6, characterised in that the protrusions and recesses are formed by a sinusoidal wave shape of the surfaces of the coating (5) and the hub ring (1) facing towards one another.

## Revendications

1. Amortisseur de vibrations en torsion. dans lequel un volant annulaire métallique (3) est fixé par un ressort annulaire (4) en caoutchouc, fabriqué indépendamment, sur le pourtour extérieur d'un moyeu annulaire (1) formé d'un matériau métallique, le moyeu annulaire (1) étant pourvu, sur le côté dirigé vers le ressort annulaire (4), d'un revêtement (5) adhérent et continu en matière plastique, caractérisé en ce que le revêtement (5) se compose d'une matière duroplastique et en ce que le rapport entre l'épaisseur radiale moyenne A du revêtement (5) et l'épaisseur radiale moyenne B du ressort annulaire (4) est compris entre 0,25 et 3.

2. Amortisseur de vibrations en torsion selon la revendication 1, caractérisé en ce que le rapport A/B est compris entre 1 et 2.

3. Amortisseur de vibrations en torsion selon la revendication 2, caractérisé en ce que le revêtement (5) se compose d'une résine époxyde ou d'une résine de polyester.

4. Amortisseur de vibrations en torsion selon une des revendications 1 à 3, caractérisé en ce que la matière plastique formant le revêtement (5) est renforcée par des fibres réparties dans celle-ci.

5. Amortisseur de vibrations en torsion selon la revendication 4, caractérisé en ce que les fibres sont réunies mutuellement sous forme d'une structure surfacique intrinsèquement résistante.

6. Amortisseur de vibrations en torsion selon l'une des revendications 1 à 5, caractérisé en ce que le revêtement est pourvu de saillie réparties dans une direction circonférentielle, orientées radialement vers l'intérieur et en ce que les saillies sont associées à des évidements en correspondance à la répartition, la forme et la grosseur du moyeu annulaire.

7. Amortisseur de vibrations en torsion selon la revendication 6, caractérisé en ce que les saillies et les évidements sont constitués par des ondulations de forme sinusoïdale des surfaces, dirigées l'une vers l'autre, du revêtement (5) et du moyeu annulaire (1).
